Europäisches Patentamt

**European Patent Office**

**Office européen des brevets**

(11) Publication number: **0 074 257**
**A2**

# (12) EUROPEAN PATENT APPLICATION

(21) Application number: **82304653.7**

(22) Date of filing: **03.09.82**

(51) Int. Cl.³: **G 01 D 5/58**

(30) Priority: **04.09.81 US 299458**

(43) Date of publication of application:
**16.03.83 Bulletin 83/11**

(84) Designated Contracting States:
**BE DE FR GB IT**

(71) Applicant: **WESTINGHOUSE ELECTRIC CORPORATION**
**Westinghouse Building Gateway Center**
**Pittsburgh Pennsylvania 15222(US)**

(72) Inventor: **Lenderking, Bruce Norwood**
**112 Alview Terrace**
**Glen Burnie Maryland(US)**

(74) Representative: **van Berlyn, Ronald Gilbert**
**23, Centre Heights**
**London, NW3 6JG(GB)**

(54) Monitoring system using redundant electro-optical modulators.

(57) A monitoring system having redundant logic channels (18a, 18b) for maintaining electrical and physical isolation between channels. The separate redundant logic channels each include an electro-optic modulator (24a, 24b) connected by a fiber optic link, with system condition sensors (14a, 14b) coupled to the respective electro-optic modulators to control the light transmission characteristics of the electro-optic modulators (24a, 24b) in response to a predetermined system condition. A light source (28) is connected by input fiber optics (30) to the logic channels (18a, 18b), and output fiber optics (34) connect the logic channels to a light detector means (32).

EP 0 074 257 A2

1

## MONITORING SYSTEM USING REDUNDANT ELECTRO-OPTICAL MODULATORS

This invention relates to an improved monitoring system using redundant electro-optical modulators. Such monitoring system is employed in nuclear power plants as safety control systems for continued safe operation.

It has been the practice to use photoelectric devices to maintain the physical and electrical insulation between redundant channels, as is taught by U.S. Patent 3,888,772. Earlier systems interconnected the separate logic channels with either relays or transformers to provide the isolation.

Electro-optical devices are well known in which a birefringent crystal is modulated by an applied electric field to vary the light transmission characteristic of the crystal. These devices have been used as electrically controlled switches as described in representative U.S. Patents 3,069,973; 3,027,806; and 3,531,179.

It is an object of this invention to provide an improved monitoring system using redundant electro-optical modulators to provide physical and electrical isolation between redundant sensors.

The invention resides in a system for monitoring a predetermined condition, comprising at least two sensors each capable of detecting a predetermined condition, characterized in that the system includes at least two redundant logic channels which are maintained electrically isolated and physically separated, means for coupling each of said at least two sensors to its associated logic channel, said at least two redundant logic channels each comprising an electro-optical modulator having a light transmission characteristic varying in response to electrical signals from its associated sensor, fiber optic means coupling said at least two redundant logic channels serially, a light source coupled to the fiber optic means, and a light detector means coupled to the fiber optic means to receive the light signal generated by the light source and modulated by the at least two electro-optic modulators.

The present invention utilizes a plurality of electro-optical modulators as coupling means for redundant sensors while maintaining physical and electrical independence of the sensors.

In the particular embodiment, the intensity of the light passed by the electro-optical modulators of the redundant optical logic units is varied and controlled as a function of the output signals generated by the redundant sensors. These sensors generate signals as a function of a predetermined system operating condition, and the signals are applied to modulate the light transmissivity through the respective redundant electro-optical modulators.

The invention will become readily apparent from the following description of an exemplary embodiment thereof when read in conjunction with the accompanying drawings, in which:

Figure 1 is a schematic representative of a monitoring system in accordance with a preferred embodiment of the present invention; and

Figure 2 is a representation showing in greater detail the optical logic units used in the embodiment of Figure 1.

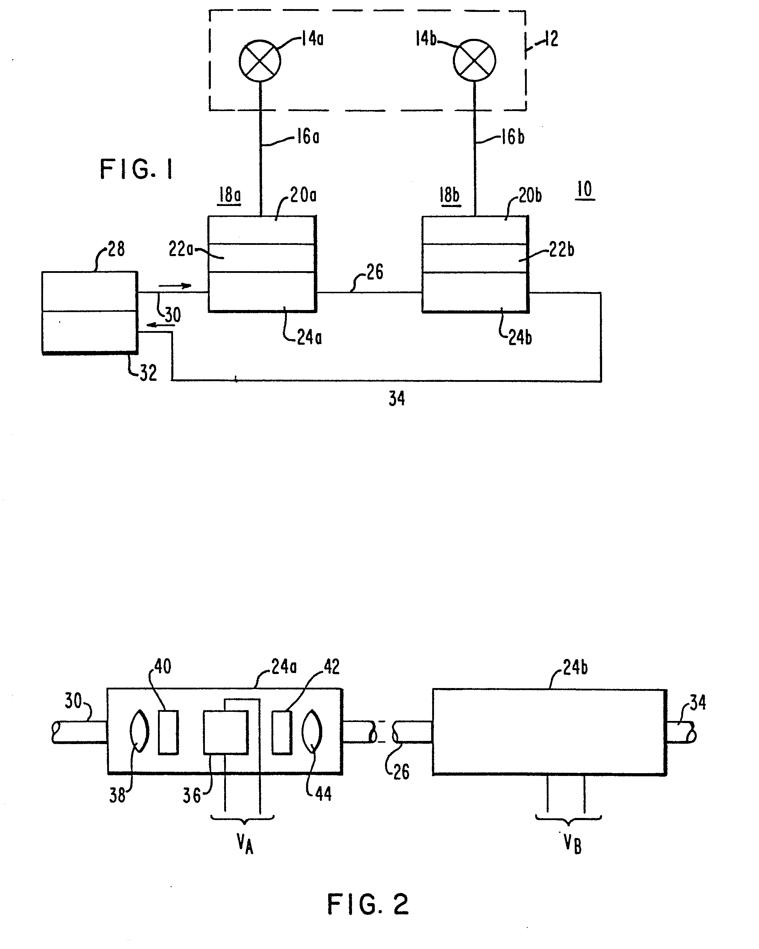

The monitoring system of the present invention can be best understood by reference to the exemplary embodiments seen in the drawings. In Figure 1, the monitoring system 10 is associated with a nuclear power plant steam supply system 12 represented by the dotted line block. A plurality of sensors 14a and 14b are disposed within the nuclear power plant steam supply system 12. The sensors 14a and 14b are redundant sensors for a specific reactor parameter, such as radiation level, coolant temperature, steam generator pressure. In this embodiment, sensors 14a and 14b are radiation detectors for measuring neutron or gamma radiation. An electrical instrumentation cable 16a and 16b is connected between each sensor and its associated unit of the monitoring system 10.

The monitoring system 10 in the Figure 1 embodiment includes two identical redundant channel means 18a and 18b, which each comprise a signal processing means 20a, 20b connected via cable 16a, 16b to the respective sensor 14a or 14b. The channel means 18a and 18b each includes an optical logic unit interface 22a and 22b and an optical logic unit 24a, 24b. The optical logic units 24a and 24b are connected by a fiber optic cable link 26.

The monitoring system 10 includes a light source 28 which is coupled by a fiber optic cable 30 to optical logic unit 24a. A light detector means 32 is connected to the output of optic logic unit 24b via a fiber optic cable 34. The light source 28 and detector means 32 are connected to permit signal synchronization and provision of a reference signal for the detected light.

The optical logic units 24a, 24b, as seen in greater detail in Figure 2, each comprise a electro-optic modulator 36 which is illustrated as an elongated member with its optical axis aligned with the input cable 30, cable link 26, and output cable 34. The electro-optic modulator 36 is formed of a selected light transmissive material which has the property that an applied electric potential orthogonal to the optical transmissive axis is effective to modulate the light beam as it passes through the modulator 26.

For a modulator 36 which modulates light intensity, an input lens 38 and polarizer 40 are aligned along the optic axis between cable 30 and modulator 36, with output polarizer 42 and lens 44 aligned along this same axis between modulator 36 and cable 26. A potential $V_A$ is applied across modulator 36 establishing an electric field orthogonal to the light transmission axis, as is well known, to modulate the intensity of light passing through modulator 36.

The input polarizer 40 has its polarization axis at an angle of 45 degrees with respect to the slow transmission axis of the modulator 36. The fast transmissive axis of modulator 36 is aligned with the optical axis through lens 38 and 44 as well as polarizer 40 and 42. The slow transmissive axis is orthogonal to the fast transmissive axis. Light from input polarizer 40 is linearly polarized. The polarization axis of the output polarizer 42 is offset 90° from that of the input polarizer 40.

The modulating potential $V_A$ applied across electro-optic modulation 36 causes a phase differential for the linearly polarized light passing through moduator 36 varying from 0 to π radians. This causes the polarization of the light to change from linear at 0 radians, to circular at π/2 radians, to linear normal relative to the input polarizer at π radians. Thus, the intensity of light passing through the output polarizer 42, which has its polarization axis 90° offset from that of the input polarizer 40, varies from 0 to 100% of the input intensity as the phase varies from 0 to π radians. The relationship of input and output light intensity for the system is defined by the equation:

$$\frac{I_o}{I_i} = \frac{1}{2}(1-\cos\phi)$$

where $I_o$ is the output intensity, $I_i$ is input intensity, and $\phi$ is the differential phase shift between the fast and slow transmission axis for the system. The ratio of $I_o$ to $I_i$ is thus 0 at 0 radians for $\phi$, is 0.5 at $\pi/2$ radians, and is 1 for $\pi$ radians.

The second optical logic unit 24b is essentially identical to unit 24a with the fiber optic cable link 26 serially connecting them along a common optical axis. This fiber optic cable link 26 serves to couple the redundant logic channels and maintain physical and electrical isolation between the units.

The logic table below helps to explain operation of the system.

<u>LOGIC TABLE</u>

| $V_A$ | $V_B$ | Intensity |
|-------|-------|-----------|
| 0 | 0 | ¼ |
| 0 | 1 | ½ |
| 1 | 0 | ½ |
| 1 | 1 | 1 |

The light intensity which the detector senses is the product of the light output intensities of the optical logic units 24a, 24b. The modulating potentials $V_A$ and $V_B$ are applied respectively to units 24a, 24b, and are a function of the conditions of the respective sensors 14a, 14b. The logic table shows that when $V_A$ is 0, and $V_B$ is 0, the light intensity sensed by detector 32 is ¼ of the light input intensity from light source 28. This results from the fact that when $V_A$ is 0, the output intensity from unit 24a is ½, and since this is the light input for unit 24b, when $V_B$ is also 0, the output intensity from unit 24b is ½ x ½ = ¼. When either $V_A$ or $V_B$ is 0, and the other is 1, the intensity at the detector will be ½. Only when the values of $V_A$ and $V_B$ are each 1 will the intensity be 1. These values can be used to denote power plant conditions.

Thus, when sensors 14a, 14b are reading normal operating conditions, the potentials $V_A$ and $V_B$ could both be 1, indicating normal operating condition. When either of the sensors 14a or 14b provides a signal which is translated to a value of $V_A$, $V_B$ which is different from that of the other sensor, this implies a fault in the system. The fault is a warning to check the sensor or compare other parameters to determine if the power plant is in fact operating normally or whether an operating parameter is outside of normal operating tolerances as to require operator correction or intervention. The intensity level of $\frac{1}{4}$ which is had when the sensors 14a, 14b both indicate the same parameter condition, and with potentials $V_A$ and $V_B$ of 0 applied to the optical logic units would indicate a definite out of tolerance system parameter and result in an automatic trip or shutdown control signal being generated. When these redundant channels both indicate the same condition, the control system is actuated to provide continued safe operator control.

The system described is a two channel system but can easily be expanded to the more commonly used three channel system used in many nuclear power plant control systems.

7

What we claim is:

1. A system for monitoring a predetermined condition, comprising at least two sensors (14) each capable of detecting a predetermined condition, characterized in that the system includes at least two redundant logic channels (18) which are maintained electrically isolated and physically separated, means (16) for coupling each of said at least two sensors to its associated logic channel, said at least two redundant logic channels (18) each comprising an electro-optical modulator (24) having a light transmission characteristic varying in response to electrical signals from its associated sensor (14), fiber optic means (30, 26, 34) coupling said at least two redundant logic channels serially, a light source (28) coupled to the fiber optic means, and a light detector means (32) coupled to the fiber optic means to receive the light signal generated by the light source (28) and modulated by the at least two electro-optic modulators (24).

2. The system of claim 1, characterized in that the electro-optic modulators (24) each comprise an elongated member of electro-optic modulatable medium (26) with its light transmission axis aligned along a common optical axis, an input polarizer (40) aligned along the common optical axis at the input end of the elongated member and having its polarization axis at a predetermined angle to the light transmission axis of the elongated member, and an output polarizer (42) aligned along the common optical axis at the output end of the elongated member and having

**0074257**

its polarization axis offset 90 degrees from that of the
input polarizer (40), wherein the electrical signal from
the sensor (14) is applied across the elongated member
(36) orthogonal to the light transmission axis.

0074257

FIG. 1

FIG. 2